# EUROPÄISCHE PATENTSCHRIFT

(11) **EP 1 123 203 B1**
(45) Veröffentlichungstag und Bekanntmachung des Hinweises auf die Patenterteilung: **12.06.2002**
(21) Anmeldenummer: 99947363.0
(22) Anmeldetag: 16.09.1999
(51) Int. Cl.: B32B 15/08

(54) **VERFAHREN ZUM HERSTELLEN EINES EINBRENNLACKIERTEN FORMBAUTEILS**
METHOD FOR PRODUCING A STOVE-ENAMELED MOLDED COMPONENT
PROCEDE DE FABRICATION D'UNE PIECE MOULEE LAQUEE A LA LAQUE A CUIRE

(30) Priorität: 09.10.1998 DE 19846533
(43) Veröffentlichungstag der Anmeldung: 16.08.2001
(73) Patentinhaber: ThyssenKrupp Stahl AG, 47166 Duisburg (DE)
(72) Erfinder: NAZIKKOL, Cetin, D-47169 Duisburg (DE); PANEK, Edgar, D-46145 Oberhausen (DE); BEHR, Friedrich, D-47804 Krefeld (DE)
(74) Vertreter: Knauf, Rudolf, Dipl.-Ing.
(86) Internationale Anmeldenummer: EP9906846
(87) Internationale Veröffentlichungsnummer: WO0021747

(56) Entgegenhaltungen:
- EP-A- 0 297 396
- US-A- 5 030 488

## Beschreibung

Die Erfindung bezieht sich auf ein Verfahren zum Herstellen eines einbrennlackierten Formbauteils aus einem Doppellagenblech mit einer mit dessen Deckblechen verklebten Zwischenlage aus einem Epoxidharz in Form eines Hotmelts.

Solche Formbauteile, die zum Beispiel im Karosseriebau von Kraftfahrzeugen eingesetzt werden, sollen ein möglichst geringes Flächengewicht bei einer hohen Beulsteifigkeit haben. Außerdem soll das Doppellagenblech gut umformbar, insbesondere gut tiefziehfähig sein. Schließlich soll das Formbauteil bei der Lackierung, insbesondere einer kathodischen Tauchlackierung und einem anschließenden Einbrennen des Lackes, keine Probleme erzeugen.

Aus der US 4,594,292 A1 ist das Problem bekannt, daß bei einem Doppellagenblech mit einer Zwischenlage aus einem Harz, die mit den Deckblechen verklebt ist, die Klebeverbindung zwischen der Zwischenlage und den Deckblechen bei hohen Verformungen durch Ablösung aufgehoben wird. Um diesem unerwünschten Phänomen zu begegnen und gleichzeitig sicherzustellen, daß die Zwischenlage während der Umformung nicht so stark gegen die Deckbleche drückt, daß diese in ihren äußeren Bereichen rissig werden, ist vorgesehen, daß die Zwischenlage aus drei verschiedenen Harzschichten mit jeweils unterschiedlichen Eigenschaften besteht. Die Kernschicht weist ein plastisches Verhalten auf, während die äußeren Schichten aus einem duktilen Harz bestehen, das unter den auftretenden Umformbelastungen nicht fließt und somit nicht gegen die Deckbleche des Doppellagenbleches drückt. Auf diese Weise sollen extreme Umformungen bei Biegungen um bis zu 180° erreicht werden, ohne daß die Zwischenlage sich von den Deckblechen ablöst und/oder Risse in den Deckblechen entstehen.

Formbauteile, die aus einem solchen Doppellagenblech hergestellt sind, sind allerdings nicht für das Einbrennlackieren geeignet, da die äußeren Schichten der Zwischenlage aus einer Mischung aus Polyäthylen und Polypropylen, also Thermoplasten bestehen, die bei Temperaturen von oberhalb 160° C flüssig werden. Beim Einbrennen des Lackes während einer Einbrennlackierung, die typischerweise bei Temperaturen von 180° C und darüber und über eine Zeitdauer von mindestens 30 Minuten erfolgt, würde die Zwischenlage teilweise auslaufen und die für die Beulsteifigkeit des Formbauteils wichtige Klebeverbindung zwischen den Deckblechen und der Zwischenlage verloren gehen.

Ferner ist ein Doppellagenblech bekannt
(EP 0 598 428 A1), bei dem eine Zwischenlage aus Polypropylen mit Klebstoff an den Deckblechen klebt. Ein solches Doppellagenblech soll für das Kaltumformen zu einem Formbauteil geeignet sein. Das Formbauteil soll nach einer Wärmebehandlung mit mindestens 135° C eine hohe Formstabilität haben. Da Polypropylen als Thermoplast bei Temperaturen oberhalb 160° C flüssig wird, gilt für ein solches Bauteil das gleiche wie bei dem vorigen Bauteil, nämlich, daß die Klebeverbindung zwischen den Deckblechen und der Zwischenlage bei einer Behandlungszeit von 30 Minuten mit einer Temperatur von mindestes 180° C, wie sie beim Lackeinbrennen üblich ist, verloren geht.

Der Erfindung liegt die Aufgabe zugrunde, ein Verfahren zum Herstellen eines einbrennlackierten Formbauteils aus einem Doppellagenblech mit einer mit dessen Deckblechen verklebten Zwischenlage aus Epoxidharz in Form eines Hotmelts zu schaffen.

Der Erfindung liegt ferner die Aufgabe zugrunde, ein Doppellagenblech zu schaffen, das sowohl tiefziehfähig ist als auch sich zum Einbrennlackieren eignet. Insbesondere soll dieses Doppellagenblech für das erfindungsgemäße Herstellungsverfahren eines einbrennlackierten Formbauteils geeignet sein.

Diese Aufgabe wird durch folgende Verfahrensschritte gelöst:
a) Nach Einbringen der Zwischenlage aus einem Epoxidharz, das erst bei Lackeinbrenntemperaturen oberhalb 180° C polymerisiert (vernetzt), zwischen die Deckbleche und räumlicher Fixierung der Deckbleche zueinander wird das Doppellagenblech bei kohärentem aber noch nicht polymiersierten (vernetzten) Epoxidharz in die Form des Bauteils umgeformt,
b) nach dem Lackieren des umgeformten Bauteils erfolgt das Einbrennen des Lackes bei einer Temperatur, bei der auch gleichzeitig die Polymerisation (Vernetzung) des Epoxidharzes erfolgt.

Bei dem erfindungsgemäßen Verfahren wird durch die Wahl eines bestimmten Epoxidharzes in einem bestimmten Zustand gewährleistet, daß bei der Umformung des Doppellagenbleches zum Formbauteil, insbesondere durch Tiefziehen, die Zwischenlage wegen des noch nicht vernetzten Epoxidharzes die Verformungen mitmacht und die Deckbleche nicht unzulässig hoch belastet werden und/oder es zum Ablösen der Deckbleche von der Zwischenlage kommt. Gleichzeitig ist auch sichergestellt, daß das Zwischenlagenmaterial wegen seines festen Zustands beim Umformen nicht zwischen den Deckblechen herausgedrückt wird. Ferner ist gewährleistet, daß das Epoxidharz nicht bei den beim Einbrennen üblichen höheren und für eine längere Zeit einwirkenden Temperaturen aufschmilzt und ausläuft, sondern polymerisiert, wodurch erst die endgültige feste Verklebung der Deckbleche mit der Zwischenlage eintritt und das Formbauteil nach Erkalten des Epoxidharzes eine optimale Beulsteifigkeit erhält.

Es wurde gefunden, daß ein Doppellagenblech mit einer Zwischenlage aus Epoxidharz folgender Rezeptur besonders geeignet ist:

| Zusammensetzung des Bindemittelsystems (in Massenprozent): | |
|---|---|
| Komponenten: | Mögliche Zusammensetzung |
| Festes Epoxidharz | 50 - 80 |
| Thixotrophiehilfsmittel | 1 - 10 |
| Mittel zum thermischen Aushärten | 1 - 8 |
| Talkum | 0 - 9 |
| Wollastonit | 0 - 10 |
| Silane | 0 - 10 |
| Durch Harz benetzbares Fasermaterial | 0 - 10 |
| Mikrohohlkugeln aus Glas | 5 - 45 |
| Mikrohohlkugeln aus Kunststoff | 0 - 10 |
| Flüssiges Epoxidharz | 0 - 25 |

Auf die rheologischen Eigenschaften des Materials der Zwischenlage kann über seine Zusatzstoffe Einfluß genommen werden. Zum Beispiel läßt sich dies mit einem das Fließverhalten bei erhöhten Temperaturen vermindernden Stoff, wie hochdisperser Kieselsäure, erreichen. Aber auch über die Mikrohohlkugeln kann darauf wirksam Einfluß genommen werden. Mit diesen Zusatzstoffen kann das Material der Zwischenlage im Temperaturbereich bis 230° C thixotrop eingestellt werden. Dadurch wird gewährleistet, daß das Material der Zwischenlage beim Lackeinbrennen nicht zwischen den Deckblechen ausläuft.

Auf einen Beschleuniger kann verzichtet werden, da die Härtung des Materials erst beim Lackeinbrennen erfolgt. Als Härter eignet sich beispielsweise Dicyandiamid.

Grundsätzlich ist es zwar möglich, als Zwischenlage nur Epoxidharz zu verwenden, doch wäre das mit hohen Materialkosten und einem hohen Gewicht des Bauteils verbunden. Um das Gewicht zu vermindern, ist nach einer Ausgestaltung vorgesehen, daß dem Epoxidharzgemisch Füllstoffe mit einer Dichte beigemischt werden, die wesentlich kleiner als die Dichte des Epoxidharzes ist. Dafür eignen sich verschiedene Stoffe, wie Cellulosefasern, Holzmehl, poröses Recylingglas, vor allem aber Mikrohohlkugeln. Solche Mikrohohlkugeln haben vorzugsweise einen Durchmesser von 10 bis 100 µm. Als Material für diese Mikrohohlkugeln können Thermoplaste, Duroplaste, keramische Materialien oder Glas Verwendung finden. Die besten Ergebnisse werden mit Glashohlkugeln erzielt. Auf diese Art und Weise lassen sich Dichten der Zwischenlage von 0,6 g/cm³ erreichen.

Die Beulsteifigkeit des Formbauteils ist unter anderem auch abhängig von der Haftung der Zwischenlage an den Deckblechen. Dies gilt sowohl für Formbauteile, die aus Doppellagenblechen mit flachen Deckflächen als auch für Formbauteile, die aus Deckblechen mit einem Noppenblech hergestellt sind. Im letzteren Fall kann die Anzahl der Noppen in dem Maß verringert werden, in dem die Haftung der Zwischenlage an den Deckblechen steigt. Um diese Haftung zu verbessern, kann dem Epoxidharzgemisch ein die adhäsive Haftung verbessernder Stoff, wie Talkum, beigemischt werden. Weiter kann die Beulsteifigkeit dadurch verbessert werden, daß ein die kohäsive Haftung verbessernder Stoff, wie Wollastonit, dem Epoxidharzgemisch beigemischt wird. Schließlich ist von Vorteil, wenn dem Epoxidharzgemisch mindestens ein Korrosionsinhibitor beigemischt ist, der verhindert, daß es zu Korrosionen an den Innenseiten der nicht zugänglichen Deckbleche kommt.

Die Zwischenlage kann auf verschiedene Art und Weise hergestellt werden.

Nach einer ersten Alternative wird als Zwischenlage eine Folie verwendet, an der die Deckbleche angeklebt werden. Das Ankleben kann mittels eines zum Beispiel auf die Deckbleche aufgestrichenen Primers erfolgen, der insbesondere nach Auflegen der Deckbleche unter Druck die Folie an die Deckbleche anklebt. Der Einsatz einer angeklebten Folie ist vor allem dann von Vorteil, wenn als Deckbleche Flachbleche verwendet werden. In diesem Fall dient die angeklebte Folie auch zur räumlichen Fixierung der Deckbleche während der Weiterverarbeitung.

Alternativ ist es allerdings auch möglich, daß das Epoxidharzgemisch als Zwischenlage unmittelbar auf ein Deckblech aufextrudiert wird.

Das Verkleben der Deckbleche mit der Zwischenlage kann auch durch Erwärmen des Verbundes aus den Deckblechen und der Zwischenlage auf Schmelztemperatur (ca. 100° C) des Epoxidharzes z.B. in einer Heißpresse erfolgen. Dabei tritt aber noch keine Polymerisation (Vernetzung) des Epoxidharzes ein.

Sofern als Deckbleche Flachbleche verwendet werden, übernimmt die an den Deckblechen angeklebte Zwischenlage die räumliche Fixierung der Deckbleche. Werden jedoch ein Noppenblech und ein Flachblech verwendet, dann erfolgt die Fixierung des Noppenbleches an das Flachblech durch Anschweißen seiner Noppen bei aufliegender Zwischenlage.

Vorzugsweise erfolgt das Anschweißen durch Widerstandsschweißen. Dabei wird die als geschlossene Folie aufgelegte oder aufextrudierte Zwischenlage im Bereich der Noppen entfernt, indem sie durch den Elektrodendruck verdrängt wird. Das Epoxidharz weicht also dem Druck beim Anschweißen aus. Von Vorteil ist, daß dabei, anders als bei einer für den Durchtritt der Noppen gelochten Zwischenlage, der Zwischenraum zwischen den Deckblechen voll volumetrisch ausgefüllt bleibt. Das Entfernen von Epoxidharz aus dem Bereich der Noppen wird erleichtert, wenn gleichzeitig Druck und Wärme wirksam sind. Die Erwärmung kann z.B. durch eine beheizbare Schweißtischplatte realisiert werden, über die das auf ihr liegende Flachblech und somit auch die Zwischenlage erwärmt wird.

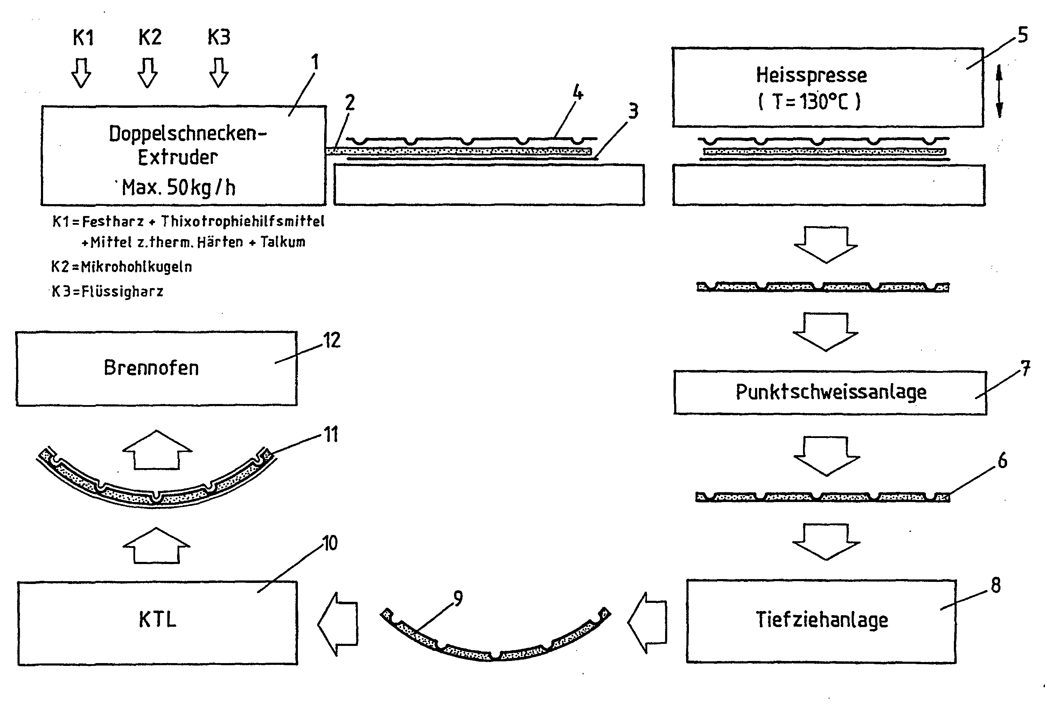

Im folgenden wird die Erfindung anhand einer Zeichnung näher erläutert. Die Zeichnung zeigt schematisch den Herstellungsprozeß eines einbrennlackierten Formbauteils ausgehend von der Phase der Herstellung eines Doppellagenbleches.

In einen Doppelschneckenextruder 1 werden als Komponenten für ein eine Zwischenlage bildendes Bindemittelsystem als Komponente K1 einem Gemisch aus Festharz, Thixotrohpiehilfsmittel, Mittel zum chemischen Aushärten, als Komponente K2 Mikrohohlkugeln und gegebenfalls als Komponente K3 Flüssigharz gegeben. Weitere Komponenten wie Fasermaterial, Holzmehl, Wollastonit und Silane etc. können zugegeben werden. Eine in der Praxis bewährte Rezeptur ist in der nachfolgenden Tabelle angegeben.

| Zusammensetzung des Bindemittelsystems (in Massenprozent): | |
|---|---|
| Komponenten: | Mögliche Zusammensetzung |
| Festes Epoxidharz | 50 - 80 |
| Thixotrophiehilfsmittel | 1 - 10 |
| Mittel zum thermischen Aushärten | 1 - 8 |
| Talkum | 0 - 9 |
| Wollastonit | 0 - 10 |
| Silane | 0 - 10 |
| Durch Harz benetzbares Fasermaterial | 0 - 10 |
| Mikrohohlkugeln aus Glas | 5 - 45 |
| Mikrohohlkugeln aus Kunststoff | 0 - 10 |
| Flüssiges Epoxidharz | 0 - 25 |

Das feste Epoxidharz kann modifiziert oder unmodifiziert sein. Vorzugsweise hat es eine Bisphenol-A-oder F-Basis. Entsprechendes gilt für das flüssige Epoxidharz. Als Mittel zum chemischen Aushärten eignet sich die Dicyandiamid. Als Thixotrophiehilfsmittel hat sich hochdisperse Kieselsäure bewährt (Aerosil®).

Die aus Komponenten K1,K2,K3 extrudierte Folie 2 wird als Zwischenlage auf ein Flachblech 3 abgelegt. Auf die Folie 2 wird von oben ein Noppenblech 4 aufgelegt. Aus der extrudierten Folie 2, dem Flachblech 3 und dem Noppenblech 4 wird ein Doppellagenblech mit der extrudierten Folie 2 als Zwischenlage und den Blechen 3 und 4 als Deckbleche gebildet. Sofern beide Deckbleche 3, 4 als Flachbleche ausgebildet sind, sollten zur vorübergehenden Fixierung des Verbundes die Bleche 3 und 4 auf ihrer der Zwischenlage 2 zugekehrten Seite mit einem Primer versehen sein, der bei Druckbeaufschlagung des Verbundes dazu führt, daß die Deckbleche 3,4 und die Zwischenlage 2 aufeinander fixiert werden. Alternativ kann die Zwischenlage 2 mittels eines Kalanders aufgebracht werden.

Als Deckbleche 3,4 eignen sich Stahlbleche mit einer Dicke von 0,1 mm bis 2,0 mm. Die Deckbleche 3,4 sind vorzugsweise verzinkt. Die Zwischenlage 2 hat vorzugsweise eine Dicke von 1 mm bis 10 mm.

Der so für die Herstellung des Doppellagenbleches vorbereitete Verbund 2,3,4 wird einer Heißpresse 5 zugeführt. Unter Zufuhr von Wärme und Druck wird das Noppenblech 4 mit seinen Noppen in die aufgeweichte Zwischenlage 2 eingedrückt. Die dabei wirksame Temperatur sollte mindestens 100° C betragen, aber unterhalb der Temperatur liegen, die zu einer Polymerisation des Epoxidharzes der Zwischenlage 2 führt. Bei einer solchen Temperatur wird das Epoxidharz im Bereich der Noppen verdrängt, so daß das gesamte Volumen zwischen den Deckblechen ausgefüllt wird. Die Noppen wirken dabei als Distanzhalter. Die durch das Pressen aufeinander gedrückten Deckbleche kontaktieren an den Stirnseiten der Noppen, so daß in einer nachfolgenden Punktschweißanlage 7 die beiden Deckbleche 3,4 an den Stirnseiten der Noppen verschweißt werden können. Neben der Fixierung der Deckbleche 3,4 über die Klebeverbindung zwischen der Zwischenlage 2 und den Deckblechen 3,4 ergibt sich durch die Schweißverbindung eine zusätzliche Fixierung der beiden Deckbleche 3,4 untereinander.

Das so hergestellte Doppellagenblech 6 wird nach gegebenenfalls vorgesehenem Zuschneiden einer Tiefziehanlage 8 zugeführt. Die Umformung des Doppellagenbleches 6 zu dem gewünschten Formbauteil ist ohne Probleme möglich, das heißt, ohne daß es zu einem Ablösen der Klebeverbindung zwischen der Zwischenlage 2 und den Deckblechen 3,4 oder einer Überbeanspruchung der Deckbleche 3,4 kommt, weil das noch nicht polymerisierte Epoxidharz der Zwischenlage 2 solche Umformungen mitmacht. Auch kommt es nicht zu einem Herausquetschen der Zwischenlage 2 über die Ränder der Deckbleche 3,4 hinaus.

Das so hergestellte Formbauteil 9 wird, nachdem es in der Regel in eine Karosserie eingebaut ist, einer Anlage zur kathodischen Tauchlackierung (KTL) 10 zugeführt. Das tauchlackierte Formbauteil 11 wird abschließend in einem Brennofen 12 bei einer Temperatur von mindestens 180° C für mindestens 30 Minuten behandelt. Höhere Temperaturen mit kürzeren Behandlungszeiten sind allerdings auch möglich. Dabei wird der Lack eingebrannt und gleichzeitig erfolgt eine Polymerisierung des Epoxidharzes der Zwischenlage 2. Diese hohe Temperatur und die verhältnismäßig lang andauernde, aber auch eine länger andauernde Behandlung übersteht das Epoxidharz problemlos. Insbesondere kommt es nicht zum Ablösen der Zwischenlage von den Deckblechen oder zum Ausfließen des Epoxidharzes. Nach Erkalten hat das Formbauteil die gewünschte hohe Beulsteifigkeit bei niedrigem Flächengewicht.

Die Rezeptur der Zwischenlage übersteht erfahrungsgemäß auch ohne Schaden einen Störfall beim Einbrennlackieren, wenn z.B. das Bauteil im Brennofen einer Temperatur von 230° C für eine die Einbrennzeit wesentlich überschreitende Zeit von bis zu 10 Minuten ausgesetzt ist.

## Patentansprüche

1. Verfahren zum Herstellen eines einbrennlackierten Formbauteils aus einem Doppellagenblech mit einer mit dessen Deckblechen verklebten Zwischenlage aus einem Epoxidharz in Form eines Hotmelts,
**gekennzeichnet durch** folgende Schritte:
a) Nach Einbringen der Zwischenlage aus einem Epoxidharz, das erst bei Lackeinbrenntemperaturen polymerisiert (vernetzt), zwischen die Deckbleche und räumlicher Fixierung der Deckbleche zueinander wird das Doppellagenblech bei kohärentem aber noch nicht polymerisiertem (vernetztem) Epoxidharz in die Form des Bauteils umgeformt,
b) nach dem Lackieren des umgeformten Bauteils erfolgt das Einbrennen des Lackes bei einer Temperatur, bei der gleichzeitig auch die Polymerisation des Epoxidharzes erfolgt.

2. Verfahren nach Anspruch 1,
**dadurch gekennzeichnet , daß** als Epoxidharz ein Gemisch aus Fest- und Flüssigharz mit einem Verhältnis von 100 : 20 bis 100 : 10 und einem Härter verwendet wird.

3. Verfahren nach Anspruch 2,
**dadurch gekennzeichnet , daß** dem Epoxidharzgemisch ein das Fließverhalten bei erhöhten Temperaturen vermindernder Stoff, wie hochdisperse Kieselsäure, beigemischt ist.

4. Verfahren nach einem der Ansprüche 1 bis 3,
**dadurch gekennzeichnet , daß** dem Epoxidharzgemisch Füllstoffe mit einer Dichte beigemischt sind, die kleiner ist als die Dichte des Epoxidharzes.

5. Verfahren nach Anspruch 4,
**dadurch gekennzeichnet , daß** als Füllstoffe Mikrohohlkugeln verwendet werden.

6. Verfahren nach einem der Ansprüche 1 bis 5,
**dadurch gekennzeichnet , daß** dem Epoxidharzgemisch ein die adhäsive Haftung verbessernder Stoff, wie Talkum, beigemischt ist.

7. Verfahren nach einem der Ansprüche 1 bis 6,
**dadurch gekennzeichnet , daß** dem Epoxidharzgemisch ein die kohäsive Haftung verbessernder Stoff, wie Wollastonit, beigemischt ist.

8. Verfahren nach einem der Ansprüche 1 bis 7,
**dadurch gekennzeichnet , daß** dem Epoxidharzgemisch mindestens ein Korrosionsinhibitor beigemischt ist.

9. Verfahren nach einem der Ansprüche 1 bis 8,
**dadurch gekennzeichnet , , daß** als Zwischenlage eine Folie verwendet wird, an der die Deckbleche angeklebt werden.

10. Verfahren nach einem der Ansprüche 1 bis 8,
**dadurch gekennzeichnet , daß** als Zwischenlage das Epoxidharzgemisch unmittelbar auf ein Deckblech aufextrudiert wird.

11. Verfahren nach einem der Ansprüche 1 bis 10,
**dadurch gekennzeichnet , daß** die Deckbleche mit der Zwischenlage durch Erwärmen des Verbundes aus den Deckblechen und der Zwischenlage auf eine unter der Vernetzungstemperatur liegende Schmelztemperatur des Epoxidharzes verklebt werden.

12. Verfahren nach einem der Ansprüche 1 bis 11,
**dadurch gekennzeichnet , daß** als Deckbleche ein Noppenblech und ein Flachblech verwendet werden, wobei das Noppenblech mit seinen Noppen an das Flachblech angeschweißt wird.

13. Verfahren nach Anspruch 12,
**dadurch gekennzeichnet , , daß** das Anschweißen durch Widerstandsschweißen erfolgt.

14. Verfahren nach Anspruch 12 oder 13,
**dadurch gekennzeichnet , daß** das Auflegen des Noppenbleches unter gleichzeitiger Anwendung von Druck und Wärme erfolgt.

15. Verfahren nach Anspruch 12,
**dadurch gekennzeichnet , daß** beim Verschweißen des Noppenblechs mit dem Flachblech das Flachblech auf einem beheizbaren Schweißtisch aufliegt, so daß Wärme vom Schweißtisch über das Flachblech in die Zwischenlage geleitet wird.

16. Tiefziehfähiges Doppellagenblech mit zwei Deckblechen aus Metall und einer zwischen den Deckblechen angeordneten Zwischenlage aus Epoxidharz, insbesondere zur Verwendung in einem Verfahren nach einem der Ansprüche 1 bis 15,
**gekennzeichnet durch** folgende Zusammensetzung:
| Zusammensetzung des Bindemittelsystems (in Massenprozent): | |
|---|---|
| Komponenten: | Mögliche Zusammensetzung |
| Festes Epoxidharz | 50 - 80 |
| Thixotrophiehilfsmittel | 1 - 10 |
| Mittel zum thermischen Aushärten | 1 - 8 |
| Talkum | 0 - 9 |
| Wollastonit | 0 - 10 |
| Silane | 0 - 10 |
| Durch Harz benetzbares Fasermaterial | 0 - 10 |
| Mikrohohlkugeln aus Glas | 5 - 45 |
| Mikrohohlkugeln aus Kunststoff | 0 - 10 |
| Flüssiges Epoxidharz | 0 - 25 |

17. Doppellagenblech nach Anspruch 16,
**dadurch gekennzeichnet, daß** eines der Deckbleche ein Noppenblech ist, dessen Noppenspitzen mit dem ebenen anderen Deckblech verschweißt sind.

18. Doppellagenblech nach Anspruch 16,
**dadurch gekennzeichnet, daß** das Doppellagenblech ein Sandwichblech mit zwei ebenen Deckblechen ist.

19. Doppellagenblech nach Anspruch 17,
**dadurch gekennzeichnet, daß** das Noppenblech nur an seinem äußeren Rand Noppen aufweist, die mit dem ebenen anderen Deckblech an den Noppenspitzen verschweißt sind, während die übrige Fläche des Noppenblechs eben ist.

20. Doppellagenblech nach Anspruch 18,
**dadurch gekennzeichnet, daß** die Zwischenlagenfolie mit den beiden ebenen Deckblechen durch einen Klebstoff verklebt ist.

## Claims

1. A process for the production of a stove-enameled moulded component from a double-layer plate having an intermediate layer of an epoxy resin in the form of a hot melt glued to its cover plates,
**characterised by** the following steps:
a) after the introduction of the intermediate layer of an epoxy resin, which polymerises (cross-links) only at enamel stoving temperatures, between the cover plates and the spatial fixing of the cover plates in relation to one another, the double-layer plate is transformed into the shape of the component with the epoxy resin coherent but not yet polymerised (cross-linked),
b) after the shaped component has been enameled, the enamel is stoved at a temperature at which the polymerisation of the epoxy resin takes place simultaneously.

2. A process according to claim 1,
**characterised in that** an epoxy resin is used which is a mixture of solid and liquid resin with a ratio of 100:20 to 100:10 and a hardener.

3. A process according to claim 2,
**characterised in that** a material, such as highly disperse silica which reduces flow behaviour at elevated temperatures is admixed to the epoxy resin mixture.

4. A process according to claims 1 to 3,
**characterised in that** fillers having a density which is lower than the density of the epoxy resin are admixed to the epoxy resin mixture.

5. A process according to claim 4,
**characterised in that** the fillers used are micro hollow balls.

6. A process according to claims 1 to 5,
**characterised in that** an adhesion-enhancing material, such as talc is admixed to the epoxy resin mixture.

7. A process according to claims 1 to 6,
**characterised in that** a material which enhances cohesive adhesion, such as wollastanite, is admixed to the epoxy resin mixture.

8. A process according to claims 1 to 7,
**characterised in that** at least corrosion inhibitor is admixed to the epoxy resin mixture.

9. A process according to claims 1 to 8,
**characterised in that** the intermediate layer used is a foil to which the cover plates are glued.

10. A process according to claims 1 to 8,
**characterised in that** the epoxy resin mixture is extruded as the intermediate layer directly on to a cover plate.

11. A process according to claims 1 to 10,
**characterised in that** the cover plates are glued to the intermediate layer by the heating of the composite formed by the cover plates and the intermediate layer to an epoxy resin melting temperature lower than the cross-linkage temperature.

12. A process according to claims 1 to 11,
**characterised in that** the cover plates used are a knobbed plate and a flat plate, the knobbed plate being welded by its knobs to the flat plate.

13. A process according to claims 1 to 12,
**characterised in that** welding-on is performed by resistance welding.

14. A process according to claims 12 or 13,
**characterised in that** the knobbed plate is applied with the simultaneous use of pressure and heat.

15. A process according to claim 12,
**characterised in that** during the welding of the knobbed plate to the flat plate, the flat plate is borne on a heatable welding table, so that heat is conveyed from the welding table via the flat plate into the intermediate layer.

16. A deep-drawable double-layer plate having two metal cover plates and an intermediate layer of epoxy resin disposed between the cover plates, more particularly for use in a process according to one of claims 1 to 15,
**characterised by** the following composition:
| Composition of the bonding agent system (in % by weight): | |
|---|---|
| Components: | Possible Composition |
| solid epoxy resin | 50 - 80 |
| thixotrophy ancillaries | 1 - 10 |
| thermal hardening agents | 1 - 8 |
| talc | 0 - 9 |
| wollastonite | 0 - 10 |
| silanes | 0 - 10 |
| resin-wettable fibre material | 0 - 10 |
| glass micro hollow balls | 5 - 45 |
| plastics micro hollow balls | 0 - 10 |
| liquid epoxy resin | 0 - 25 |

17. A double-layer plate according to claim 16,
**characterised in that** one of the cover plates is a knobbed plate whose knob tips are welded to the other, flat cover plate.

18. A double-layer plate according to claim 16,
**characterised in that** the double-layer plate is a sandwich plate having two flat cover plates.

19. A double-layer plate according to claim 17,
**characterised in that** the knobbed plate has exclusively at its outer edge knobs which are welded at the knob tips to the other, flat cover plate, while the remaining surface of the knobbed plate is flat.

20. A double-layer plate according to claim 18,
**characterised in that** the intermediate layer foil is glued by an adhesive to the two flat cover plates.
Wording on drawing: A = hot press; B = spot welding installation; C = deep drawing installation; D = cathodic immersion enameling; E = furnace; F = double screw extruder;
G = K1 = solid resin + thixotrophy ancillaries + thermal hardening agents + talc
K2 = micro hollow balls
K3 = liquid resin

## Revendications

1. Procédé de fabrication d'une pièce moulée laquée au four constitué d'une tôle à double couche avec une couche intermédiaire collée à ses tôles de couverture et constituée d'une résine époxyde sous la forme d'une colle thermofusible,
**caractérisé par** les étapes suivantes :
a) après insertion de la couche intermédiaire constituée d'une résine époxyde, qui ne polymérise (réticule) qu'aux températures de cuisson de laque, entre les tôles de recouvrement et fixation spatiale des tôles de recouvrement l'une à l'autre, la tôle à double couche est transformée en composant alors que la résine époxyde est cohérente, mais pas encore polymérisée (réticulée),
b) après laquage de la pièce transformée, la cuisson de la laque se fait à une température à laquelle se fait simultanément aussi la polymérisation de la résine époxyde.

2. Procédé selon la revendication 1, **caractérisé en ce que** l'on utilise comme résine époxyde un mélange de résine solide et de résine liquide dans le rapport de 100:20 à 100 :10 et d'un durcisseur.

3. Procédé selon la revendication 2, **caractérisé en ce que** l'on ajoute au mélange de résine époxyde une substance qui réduit le comportement au fluage à des températures élevées, notamment de l'acide silicique hautement dispersé.

4. Procédé selon l'une quelconque des revendications 1 à 3, **caractérisé en ce que** l'on ajoute au mélange de résine époxyde des charges ayant une densité qui est inférieure à la densité de la résine époxyde.

5. Procédé selon la revendication 4, **caractérisé en ce que** l'on utilise comme charges des microbilles creuses.

6. Procédé selon l'une quelconque des revendications 1 à 5, **caractérisé en ce que** l'on ajoute au mélange de résine époxyde une substance améliorant l'adhérence par adhésion, comme le talc.

7. Procédé selon l'une quelconque des revendications 1 à 6, **caractérisé en ce que** l'on ajoute au mélange de résine époxyde une substance améliorant l'adhérence par cohésion, comme la Wollastonite.

8. Procédé selon l'une quelconque des revendications 1 à 7, **caractérisé en ce que** l'on ajoute au mélange de résine époxyde au moins un inhibiteur de corrosion.

9. Procédé selon l'une quelconque des revendications 1 à 8, **caractérisé en ce que** l'on utilise comme couche intermédiaire un film sur lequel sont collées les tôles de couverture.

10. Procédé selon l'une quelconque des revendications 1 à 8, **caractérisé en ce que** l'on extrude, comme couche intermédiaire, le mélange de résine époxyde directement sur une tôle de couverture.

11. Procédé selon l'une quelconque des revendications 1 à 10, **caractérisé en ce que** les tôles de couverture sont collées à la couche intermédiaire par chauffage du composite constitué des tôles de couverture et de la couche intermédiaire à une température de fusion de la résine époxyde qui se situe en dessous de la température de réticulation.

12. Procédé selon l'une quelconque des revendications 1 à 11, **caractérisé en ce que** l'on utilise comme tôles de couverture une tôle à protubérances et une tôle plate, la tôle à protubérances étant soudée par ses protubérances à la tôle plate.

13. Procédé selon la revendication 12, **caractérisé en ce que** le soudage se fait par soudage par résistance.

14. Procédé selon la revendication 12 ou 13, **caractérisé en ce que** l'application de la tôle à protubérances se fait avec application simultanée de pression et de chaleur.

15. Procédé selon la revendication 12, **caractérisé en ce que**, lors du soudage de la tôle à protubérances avec le tôle plate, la tôle plate repose sur une table de soudage qui peut être chauffée de telle sorte que la chaleur de la table de soudage soit transférée à la couche intermédiaire via la tôle plate.

16. Tôle à double couche emboutissable comprenant deux tôles de couverture constituées de métal et une couche intermédiaire agencée entre les tôles de couverture et constituée de résine époxyde, en particulier pour un usage dans un procédé selon l'une quelconque des revendications 1 à 15, **caractérisée par** la composition suivante :
| Composition du système liant (en % en masse) | |
|---|---|
| Composants | Composition possible |
| Résine époxyde solide | 50 - 80 |
| Agent auxiliaire thixotrope | 1 - 10 |
| Agent de durcissement thermique | 1 - 8 |
| Talc | 0 - 9 |
| Wollastonite | 0 - 10 |
| Silane | 0 - 10 |
| Matériau fibreux mouillable par la résine | 0 - 10 |
| Microbilles creuses de verre | 5 - 45 |
| Microbilles creuses de matériau synthétique | 0 - 10 |
| Résine époxyde liquide | 0 - 25 |

17. Tôle à double couche selon la revendication 16, **caractérisée en ce qu'**une des tôles de couverture est une tôle à protubérances, dont les pointes sont soudées à une autre tôle de couverture lisse.

18. Tôle à double couche selon la revendication 16, **caractérisée en ce que** la tôle à double couche est une tôle sandwich avec deux tôles de couverture lisses.

19. Tôle à double couche selon la revendication 17, **caractérisée en ce que** la tôle à protubérances ne présente de protubérances que sur son bord externe, lesdites protubérances étant soudées à l'autre tôle de couverture lisse sur les pointes des protubérances, tandis que le restant de la surface de la tôle à protubérances est lisse.

20. Tôle à double couche selon la revendication 18, **caractérisée en ce que** le film de la couche intermédiaire est collé aux deux tôles de couverture lisses par une colle.
